# EUROPÄISCHE PATENTSCHRIFT

(11) **EP 2 490 063 B1**
(45) Veröffentlichungstag und Bekanntmachung des Hinweises auf die Patenterteilung: **05.01.2022**
(21) Anmeldenummer: 12155911.6
(22) Anmeldetag: 17.02.2012
(51) Int. Cl.: G02B 26/10

(54) **Laserscanningmikroskop mit einer Spiegelvorrichtung**
Laser scanning microscope with scanning mirror device
Microscope à balayage laser avec dispositif de miroir de balayage

(30) Priorität: 21.02.2011 DE 102011004477; 21.02.2011 US 201161444846 P
(43) Veröffentlichungstag der Anmeldung: 22.08.2012
(73) Patentinhaber: Carl Zeiss Microscopy GmbH, 07745 Jena (DE)
(72) Erfinder: Richter, Stefan, 07743 Jena (DE); Milanovic, Veljko, Richmond 94804 (US); Rudolph, Günter, 07743 Jena (DE); Stutz, Michel, 81541 München (DE); Krampert, Gerhard, Unit D, Pleasanton CA 94566 (US)
(74) Vertreter: Patentanwälte Geyer, Fehners & Partner mbB

(56) Entgegenhaltungen:
- EP-A2- 0 390 969
- WO-A1-03/012818
- DE-A1- 10 357 062
- JP-A- H0 744 647
- MILANOVIC V ET AL: "Monolithic high aspect ratio two-axis optical scanners in SOI", PROCEEDINGS OF THE IEEE 16TH. ANNUAL INTERNATIONAL CONFERENCE ON MICRO ELECTRO MECHANICAL SYSTEMS. MEMS 2003. KYOTO, JAPAN, AN. 19 - 23, 2003; [IEEE INTERNATIONAL MICRO ELECTRO MECHANICAL SYSTEMS CONFERENCE], NEW YORK, NY : IEEE, US, vol. CONF. 16, 19 January 2003 (2003-01-19), pages 255-258, XP010636957, DOI: 10.1109/MEMSYS.2003.1189734 ISBN: 978-0-7803-7744-8

## Beschreibung

Die vorliegende Erfindung betrifft ein Laserscanningmikroskop mit einer Scanspiegelvorrichtung mit einem Mikrosystem-Scanspiegel, der um zumindest eine Achse drehbar gelagert ist. Ein solcher Mikrosystem-Scanspiegel ist z.B. aus der US 7,295,726 B1 sowie aus MILANOVIC V ET AL: "Monolithic high aspect ratio two-axis optical scanners in SOI", PROCEEDINGS OF THE IEEE 16TH. ANNUAL INTERNATIONAL CONFERENCE ON MICRO ELECTRO MECHANICAL SYSTEMS. MEMS 2003. KYOTO, JAPAN, AN. 19 - 23, 2003; [IEEE INTERNATIONAL MICRO ELECTRO MECHANICAL SYSTEMS CONFERENCE], NEW YORK, NY: IEE, US, Bd. CONF. 16, 19. Januar 2003, Seiten 255-258, XP01063957, DOI: 10.1109/ MEMSYS.2003.1189734, ISBN: 978-0-7803-7744-8 bekannt. Die WO 03/012818 A1 beschreibt in schaltbares Zwei-Lichtleitfasersystem, bei dem zum Umschalten ein drehbarer Spiegel vorgesehen ist. Ein Laserscanningmikroskop mit Positionserkennung des Scanspiegels ist aus JP H07 44647 A bekannt.

Häufig werden solche Mikrosystem-Scanspiegel resonant betrieben, so daß der Kippwinkel mit der Resonanzfrequenz des Scanspiegels oszilliert und somit sinusförmige Muster oder Lissajous-Muster beschreibt. In diesen Fällen reicht es häufig, wenn nur der Nulldurchgang detektiert wird. Bei elektrostatischen Kammantrieben wird dies hauptsächlich durch Messen der maximalen Kapazität der Kammantriebe während der Oszillation durchgeführt. Piezoresistive und induktive Messungen sind ebenfalls gängig.

Bei einer quasistatischen Positionierung des Scanspiegels können zwar bei Kammantrieben immer noch die Kapazitäten gemessen werden. Jedoch hat sich gezeigt, daß dies zu ungenau ist und häufig auch nicht genau mit dem Kippwinkel des Scanspiegels korreliert. Die Messung des piezoelektrischen Widerstandes der Festkörpergelenke für die Bewegung des Scanspiegels ist nicht möglich, weil die Festkörpergelenke bei quasistatischen Spiegeln zu dünn sind. Ausgehend hiervon ist es Aufgabe der Erfindung, ein Laserscanningmikroskop mit einer Scanspiegelvorrichtung mit einem Mikrosystem-Scanspiegel, der um zumindest eine Achse drehbar gelagert ist, bereitzustellen, mit der die Drehstellung des Scanspiegels genau und kontinuierlich gemessen werden kann.

Die Erfindung ist im Anspruch 1 definiert.

Vorteilhafte Weiterbildungen sind in den abhänggien Ansprüchen angegeben.

Da das Detektionsmodul eine berührungslose optische Messung des Kippwinkels von hinten durchführt, wird einerseits der Kippwinkel direkt und genau gemessen. Andererseits führt die Messung von hinten zu dem Vorteil, daß der bestimmungsgemäße Einsatz des Mikrosystem-Scanspiegels (also z.B. die Ablenkung eines auf den Scanspiegel gerichteten Laserstrahles) nicht behindert wird, da das Detektionsmodul nicht im normalen Arbeitsbereich (also vor dem Scanspiegel) angeordnet ist.

Bevorzugt ist der Mikrosystem-Scanspiegel um zwei Achsen drehbar gelagert, wobei das Detektionsmodul den Dreh- bzw. Kippwinkel um beide Achsen messen kann.

Die Lichtquelle kann als LED oder als Laser ausgebildet sein, wobei die Wellenlänge des Lichtstrahles bevorzugt im sichtbaren Wellenlängenbereich und/oder im Infrarotbereich liegt.

Das Detektionsmodul kann so weitergebildet sein, daß es basierend auf den Ausgangssignalen des Positionsdetektors ein Winkelsignal abgibt, das den Drehwinkel um die zumindest eine Achse repräsentiert. Bevorzugt wird das Winkelsignal laufend ausgegeben.

Der Scanspiegel weist bevorzugt einen Spiegel bzw. einen Ablenkspiegel sowie eine Kippmechanik auf, wobei der Ablenkspiegel direkt oder über einen Träger mit der Kippmechanik verbunden sein kann. Unter der Rückseite des Scanspiegels wird daher hier insbesondere die Rückseite des Ablenkspiegels und/oder ein Teil des Trägers verstanden. Wesentlich ist, daß die Rückseite die Seite ist, die beim bestimmungsgemäßen Einsatz des Mikrosystem-Scanspiegels nicht mit dem z.B. abzulenkenden Laser- bzw. Lichtstrahl beaufschlagt wird.

Das Detektionsmodul kann eine Abbildungsoptik aufweisen, die den Lichtstrahl auf die Rückseite des Scanspiegels fokussiert. Insbesondere kann die Abbildungsoptik eine 1:1-Abbildungsoptik sein.

Das Detektionsmodul weist eine Projektionsoptik auf, die den von der Rückseite des Scanspiegels reflektierten Lichtstrahl als kollimierten Lichtstrahl auf den Positionsdetektor abbildet. Die Projektionsoptik kann Teil der Abbildungsoptik sein. Insbesondere kann in diesem Fall ein Strahlteiler vorgesehen sein, der zur Trennung des Lichtstrahls von der Lichtquelle und des von der Rückseite des Scanspiegels reflektierten Lichtstrahles dient.

Ferner kann die Abbildungsoptik zumindest zwei Teiloptiken aufweisen und der Strahlteiler zwischen beiden Teiloptiken angeordnet sein. In diesem Fall ist es vorteilhaft, daß der Strahlengang zwischen beiden Teiloptiken für den Lichtstrahl der Lichtquelle ein kollimierter Strahlengang ist.

Der Positionsdetektor kann beispielsweise als Quadrantendetektor ausgebildet sein. In diesem Fall ist das Detektionsmodul bevorzugt so ausgebildet, daß bei allen zu messenden Kippstellungen der reflektierte Lichtstrahl stets alle Quadranten des Quadrantendetektors trifft.

Der Positionsdetektor kann eine Durchgangsöffnung aufweisen, durch die der Lichtstrahl der Lichtquelle läuft, bevor er auf die Rückseite des Scanspiegels trifft.

Ferner kann der Mikrosystem-Scanspiegel in ein Gehäuse eingebaut sein, wobei in der Gehäuseunterseite eine Durchgangsöffnung ausgebildet ist, durch die der Scanspiegel von hinten mit dem Lichtstrahl beaufschlagt werden kann. Wesentlich ist, daß die Durchgangsöffnung für den Lichtstrahl der Lichtquelle transparent ist. Somit kann die Durchgangsöffnung auch durch einen Bereich der Gehäuseunterseite gebildet sein, die für den Lichtstrahl der Lichtquelle transparent ist.

Die Scanspiegelvorrichtung kann ein Steuermodul aufweisen, das mit dem Positionsdetektor und dem Mikrosystem-Scanspiegel verbunden ist. Das Steuermodul kann dazu eingesetzt werden, um den Scanspiegel gesteuert zu kippen, wobei die Kippstellung laufend mittels dem Detektionsmodul ermittelt wird. In diesem Fall kann man das Steuermodul auch als Kontrollmodul bezeichnen, da man nicht nur einen Sollwert vorgibt, sondern auch auf einen Istwert reagiert.

Der Scanspiegel kann einen Ablenkspiegel und eine damit verbundene Kippmechanik aufweisen, die zum Verkippen des Ablenkspiegels dient. Ferner kann ein Substrat vorgesehen sein, auf dem die Kippmechanik ausgebildet ist.

Das Substrat kann eine Durchgangsöffnung aufweisen, durch die die Rückseite des Scanspiegels mit dem Lichtstrahl der Lichtquelle beaufschlagbar ist. Die Durchgangsöffnung kann als tatsächliche Öffnung im Substrat ausgebildet sein oder kann durch ein für den Lichtstrahl der Lichtquelle transparentes Material gebildet sein.

Der Scanspiegel (und somit der Ablenkspiegel und die Kippmechanik) kann monolithisch mit dem Substrat ausgebildet sein. Insbesondere kann der Scanspiegel als MEMS-Scanspiegel ausgebildet sein. Beispiele der monolithischen Ausbildung solcher MEMS-Scanspiegel sind dem Fachmann bekannt und z.B. in der US 7,295,726 B1 beschrieben, auf die hiermit Bezug genommen wird.

Bei dem Laserscanningmikroskop dient die Scanspiegelvorrichtung bevorzugt dazu, die notwendige Ablenkung des Laserstrahls für die Bilderzeugung durchzuführen.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine schematische Ansicht einer ersten Ausführungsform der erfindungsgemäßen Scanspiegelvorrichtung;
- Fig. 2: eine Draufsicht auf den Quadrantendetektor 19 von Fig. 1;
- Fig. 3: eine Ansicht der Scanspiegelvorrichtung von Fig. 1 mit unterschiedlicher Kippstellung des Spiegels 7, und
- Fig. 4: eine Draufsicht auf den Quadrantendetektor für die Kippstellung des Spiegels 7 gemäß Fig. 3.

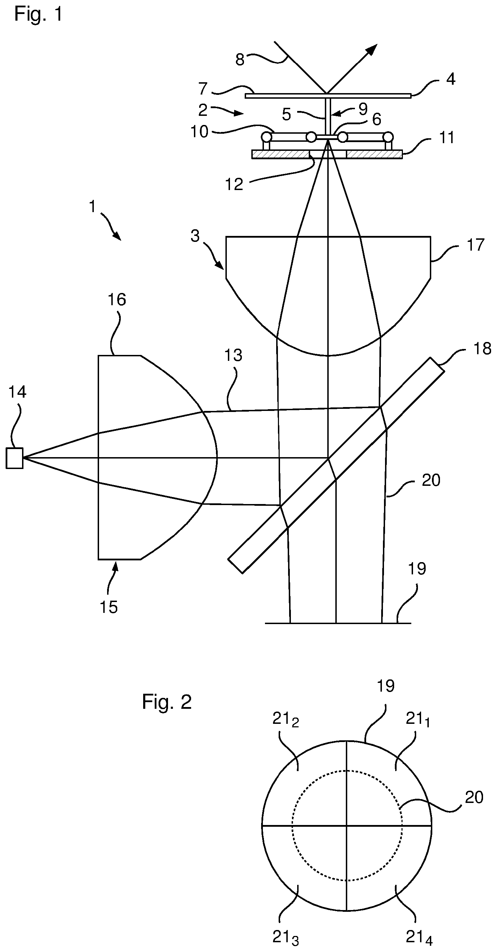

Bei der in Fig. 1 gezeigten Ausführungsform umfaßt die erfindungsgemäße Scanspiegelvorrichtung 1 einen Mikrosystem-Scanspiegel 2 und ein Detektionsmodul 3.

Der Mikrosystem-Scanspiegel 2 enthält eine Spiegelplatte 4 mit einem Durchmesser von z.B. 2,5 mm, die mittels eines Stegs 5 mit einer Grundplatte 6, die z.B. einen Durchmesser von 300µm aufweist, verbunden ist. Die Oberseite der Spiegelplatte 4 ist mit einer reflektiven Beschichtung beschichtet und bildet somit einen Spiegel 7, der einfallende Strahlung reflektiert, wie durch den schematisch dargestellten Strahlenverlauf 8 angedeutet ist. Die Spiegelplatte 4, der Steg 5 und die Grundplatte 6 bildet einen Träger 9, mit dem der Spiegel 7 verbunden ist.

Der Träger 9 kann mittels der schematisch dargestellten Kippmechanik 10 um eine senkrecht zur Bildebene verlaufende Achse gedreht werden. Die Kippmechanik 10 ist auf einem Substrat 11 ausgebildet.

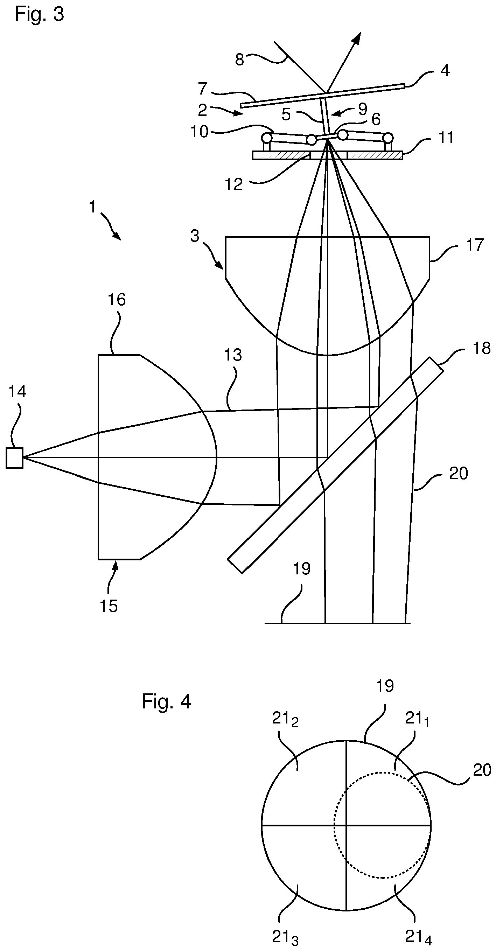

In Fig. 3 ist schematisch eine andere Kipp- bzw. Drehstellung des Trägers 9 und somit des Spiegels 7 gezeigt.

Der Mikrosystem-Scanspiegel 2 ist monolithisch ausgebildet. Konkrete Ausbildungen eines solchen Mikrosystem-Scanspiegels, der auch als MEMS-Scanspiegel (MEMS = Micro-Electro-Mechanical-System) bezeichnet werden kann, können z.B. der US 7,295,726 B1 entnommen werden.

Bei der hier beschriebenen Scanspiegelvorrichtung 1 weist das Substrat 11 im Unterschied zu bisher bekannten MEMS-Scanspiegeln eine Durchgangsöffnung 12 auf, so daß mittels des Detektionsmoduls 3 der Drehwinkel des Trägers 9 (hier der Grundplatte 6) und somit des Spiegels 7 berührungslos von hinten gemessen werden kann.

Für die berührungslose Messung des Drehwinkels des Trägers 9 umfaßt das Detektionsmodul 3 eine Lichtquelle 14 (hier z.B. eine Laserdiode), die einen Lichtstrahl 13 abgibt, eine 1:1-Abbildungsoptik 15 mit einer ersten Linse 16, einer zweiten Linse 17 sowie einer zwischen beiden Linsen 16, 17 angeordneten teiltransparenten Platte 18, und einen Quadrantendetektor 19.

Wie dem schematisch eingezeichneten Strahlenverlauf in Fig. 1 zu entnehmen ist, wird die (hier als punktförmig angenommene) Austrittsöffnung der Lichtquelle 14 auf die Unterseite der Grundplatte 6 mittels der 1:1-Abbildungsoptik 15 und durch die Durchgangsöffnung 12 des Substrates 11 abgebildet, so daß der Lichtstrahl 13 auf die Unterseite der Grundplatte 6 fokussiert wird. Die an der Grundplatte 6 reflektierte Strahlung wird mittels der zweiten Linse 17 als im wesentlichen kollimiertes Strahlenbündel 20 durch die teiltransparente Platte 18 auf dem Quadrantendetektor 19 abgebildet. Wie der Draufsicht auf den Quadrantendetektor in Fig. 2 zu entnehmen ist, trifft das kollimierte Strahlenbündel 20 so zentral auf den Quadrantendetektor 19, daß jeweils ein Viertel der Strahlungsintensität auf jeden der vier Quadranten 21₁, 21₂, 21₃ und 21₄ des Quadrantendetektors 19 trifft.

Wenn der Spiegel 7 und somit der Träger 9 des Mikrosystem-Scanspiegels 2 um die Achse gekippt wird, wandert das kollimierte Strahlenbündel 20 über den Quadrantendetektor 19, wie in den Darstellungen von Fig. 2 und Fig. 4 angedeutet ist. Durch Auswertung der auf jeden der vier Quadranten 21₁, 21₂, 21₃ und 21₄ treffenden Strahlungsintensität kann somit die jeweilige Kippstellung des Spiegels 7 berührungslos gemessen werden.

Die Durchgangsöffnung 12 kann als tatsächliche Öffnung ausgebildet sein oder kann durch ein für den Lichtstrahl 13 transparentes Material realisiert sein. Natürlich kann auch das gesamte Substrat 11 ein für den Lichtstrahl 13 transparentes Material sein.

Bei der bisherigen Beschreibung wurde davon ausgegangen, daß der Träger 9 nur um eine erste Achse senkrecht zur Zeichenebene in Fig. 1 gekippt werden kann. Natürlich kann der Mikrosystem-Scanspiegel 2 so ausgebildet werden, daß auch ein Kippen um eine zweite Achse, die in der Zeichenebene von Fig. 1 liegt und senkrecht zu der ersten Achse verläuft, möglich ist. Auch die Kippstellung um die zweite Achse ist mit dem hier beschriebenen Detektionsmodul 3 berührungslos meßbar, da bei einer solchen Kippung die jeweils auf die Quadranten 21₁ und 21₄ sowie 21₂ und 21₃ treffende Strahlungsintensität nicht mehr gleich groß ist.

Da bei der erfindungsgemäßen Scanspiegelvorrichtung 1 die jeweilige Kippstellung des Mikrosystem-Scanspiegels 2 von hinten berührungslos gemessen wird, ist kein Eingriff in den Strahlenverlauf 8 und somit im Nutzstrahlenverlauf des Scanspiegels 7 notwendig, was vorteilhaft ist. Damit läßt sich ein kompaktes und nicht durch das Detektionsmodul 3 optisch verschlechteter Strahlenverlauf 8 realisieren. Die erfindungsgemäße Scanspiegelvorrichtung 1 kann z.B. in einem Laserscanningmikroskop eingesetzt werden, um die notwendige Ablenkung des Laserstrahls für die Bilderzeugung durchzuführen.

Wenn der Mikrosystem-Scanspiegel 2 in einem Gehäuse oder einem sogenannten Package montiert ist, ist in dem Gehäuse bzw. Package in der Unterseite erfindungsgemäß eine Öffnung so vorgesehen, daß die Grundplatte 6 des Trägers 9 in der beschriebenen Art und Weise von hinten mit dem Licht der Lichtquelle 14 beaufschlagt werden kann, um berührungslos die Drehstellung des Trägers 9 und somit des Spiegels 7 zu detektieren.

Mit dem beschriebenen Aufbau ist eine Detektion der Kippstellung des Spiegels 7 mit einigen Hundert Hz bis zu einigen MHz möglich, so daß eine Steuerung der Kippstellung des Spiegels 7 basierend auf der gemessenen Kippstellung gut realisiert werden kann. Insbesondere kann somit ein Regelkreis bereitgestellt werden, mit dem gewünschte Kippstellungen bzw. ein Kippstellungsverlauf geregelt durchgeführt wird.

Die beleuchtete Unterseite der Grundplatte 6 kann, muß aber nicht, verspiegelt sein.

Die beschriebene Ausbildung des Detektionsmoduls 3 mit dem kollimierten Strahlenbündel 20 ist ferner dahingehend von Vorteil, daß eine Justierung des Detektionsmoduls 3 leicht durchgeführt werden kann.

Bei den beschriebenen Ausführungsformen, bei denen jeweils ein Quadrantendetektor 19 vorgesehen ist, ist das Detektionsmodul 3 jeweils so ausgelegt, daß das Strahlenbündel 20 bei jeder Kippstellung jeweils auf alle vier Quadranten 21₁-21₄ trifft.

Bei den beschriebenen Ausführungsformen wurde das Strahlenbündel 13 stets an der Unterseite der Grundplatte 6 reflektiert. Je nach Aufbau des Mikrosystem-Scanspiegels 7 kann es auch vorkommen, daß das Strahlenbündel 13 an der Rückseite des Spiegels 7 reflektiert wird.

## Patentansprüche

1. Laserscanningmikroskop mit einer Scanspiegelvorrichtung mit einem Mikrosystem-Scanspiegel (2), der um zumindest eine Achse drehbar gelagert ist, und einem Detektionsmodul (3), das eine Lichtquelle (14), die einen Lichtstrahl (13) abgibt, und einen Positionsdetektor (19, 25, 26) aufweist, **dadurch gekennzeichnet, dass** der Scanspiegel als monolithisch ausgebildeter Mikrosystem-Scanspiegel ausgebildet ist, und das Detektionsmodul (3) den Scanspiegel (7) von hinten mit dem Lichtstrahl (13) beaufschlagt, so dass der Lichtstrahl (13) an der Rückseite des Scanspiegels (2) zum Positionsdetektor (19, 25, 26) reflektiert wird, der die Position des reflektierten Lichtstrahles (20) misst, aus der der Drehwinkel des Scanspiegels (7) um die zumindest eine Achse ableitbar ist, wobei das Detektionsmodul (3) eine Abbildungsoptik (15), die den Lichtstrahl (13) auf die Rückseite des Scanspiegels (2) fokussiert, und eine Projektionsoptik (17) aufweist, die den von der Rückseite des Scanspiegels (2) reflektierten Lichtstrahl (20) als kollimierten Lichtstrahl (20) auf den Positionsdetektor (19) abbildet.

2. Laserscanningmikroskop nach Anspruch 1, bei dem die Abbildungsoptik (15) als 1:1-Abbildungsoptik ausgebildet ist.

3. Laserscanningmikroskop nach Anspruch 1 oder 2, bei dem die Abbildungsoptik (15) einen Strahlteiler (18) enthält, der zur Trennung des Lichtstrahls (13) von der Lichtquelle (14) und des von der Rückseite des Scanspiegels (2) reflektierten Lichtstrahles (20) dient.

4. Laserscanningmikroskop nach einem der Ansprüche 1 bis 3, bei dem die Abbildungsoptik (15) zumindest zwei Teiloptiken (16, 17) aufweist und der Strahlteiler (18) zwischen beiden Teiloptiken (16, 17) angeordnet ist.

5. Laserscanningmikroskop, bei dem die Lichtquelle (14) als LED ausgebildet ist und der Strahlengang zwischen beiden Teiloptiken (16, 17) für den Lichtstrahl der Lichtquelle (14) ein kollimierter Strahlengang ist.

6. Laserscanningmikroskop nach einem der obigen Ansprüche, bei dem der Positionsdetektor (19, 25) als Quadrantendetektor ausgebildet ist.

7. Laserscanningmikroskop nach einem der obigen Ansprüche, bei dem der Lichtstrahl (13) der Lichtquelle (14) durch den Positionsdetektor läuft und auf die Rückseite des Scanspiegels (2) trifft.

8. Laserscanningmikroskop nach einem der obigen Ansprüche, bei dem der Mikrosystem-Scanspiegel (2) in ein Gehäuse eingebaut ist, wobei die Gehäuseunterseite eine Durchgangsöffnung aufweist, durch die die Rückseite des Scanspiegels (2) mit dem Lichtstrahl (13) der Lichtquelle (14) beaufschlagbar ist.

9. Laserscanningmikroskop nach einem der obigen Ansprüche, bei dem das Detektionsmodul (3) anhand der gemessenen Position des reflektierten Lichtstrahles (13) ein Winkelsignal ausgibt, das den Drehwinkel des Scanspiegels (7) um die zumindest eine Achse repräsentiert.

10. Laserscanningmikroskop nach einem der obigen Ansprüche, bei dem der Scanspiegel (2) einen Ablenkspiegel (4) und eine damit verbundene Kippmechanik (10) aufweist und ein Substrat (11) vorgesehen ist, auf dem die Kippmechanik (10) ausgebildet ist.

11. Laserscanningmikroskop nach Anspruch 10, bei dem das Substrat (11) eine Durchgangsöffnung (12) aufweist, durch die die Rückseite des Scanspiegels (2) mit dem Lichtstrahl (13) der Lichtquelle (14) beaufschlagbar ist.

12. Laserscanningmikroskop nach Anspruch 10 oder 11, bei dem der Scannspiegel (2) monolithisch mit dem Substrat (11) ausgebildet ist.

13. Laserscanningmikroskop nach einem der obigen Ansprüche, bei dem der Scanspiegel (2) als MEMS-Scanspiegel ausgebildet ist.

## Claims

1. Laser scanning microscope with a scanning mirror apparatus with a microsystem scanning mirror (2) which is mounted so as to be rotatable about at least one axis and with a detection module (3) having a light source (14) that emits a light beam (13) and having a position detector (19, 25, 26), **characterized in that** the scanning mirror is embodied as a monolithically formed microsystem scanning mirror and the detection module (3) applies the light beam (13) to the back of the scanning mirror (7) such that the light beam (13) is reflected at the rear side of the scanning mirror (2) to the position detector (19, 25, 26) which measures the position of the reflected light beam (20), from which it is possible to derive the rotation angle of the scanning mirror (7) about the at least one axis, wherein the detection module (3) has an imaging optical unit (15) which focuses the light beam (13) onto the rear side of the scanning mirror (2) and a projection optical unit (17) which images the light beam (20) reflected by the rear side of the scanning mirror (2) on the position detector (19) as a collimated light beam (20).

2. Laser scanning microscope according to Claim 1, wherein the imaging optical unit (15) is embodied as a 1:1 imaging optical unit.

3. Laser scanning microscope according to Claim 1 or 2, wherein the imaging optical unit (15) contains a beam splitter (18) that serves to separate the light beam (13) coming from the light source (14) from the light beam (20) reflected from the rear side of the scanning mirror (2) .

4. Laser scanning microscope according to any one of Claims 1 to 3, wherein the imaging optical unit (15) has at least two partial optical units (16, 17) and the beam splitter (18) is arranged between the two partial optical units (16, 17).

5. Laser scanning microscope, wherein the light source (14) is embodied as an LED and the beam path between the two partial optical units (16, 17) is a collimated beam path for the light beam from the light source (14).

6. Laser scanning microscope according to any one of the preceding claims, wherein the position detector (19, 25) is embodied as a quadrant detector.

7. Laser scanning microscope according to any one of the preceding claims, wherein the light beam (13) of the light source (14) runs through the position detector and strikes the rear side of the scanning mirror (2).

8. Laser scanning microscope according to any one of the preceding claims, wherein the microsystem scanning mirror (2) is installed in a housing, wherein the housing lower side has a passage opening through which the rear side of the scanning mirror (2) is able to be impinged by the light beam (13) of the light source (14).

9. Laser scanning microscope according to any one of the preceding claims, wherein the detection module (3) outputs an angle signal representing the rotation angle of the scanning mirror (7) about the at least one axis on the basis of the measured position of the reflected light beam (13).

10. Laser scanning microscope according to any one of the preceding claims, wherein the scanning mirror (2) has a deflection mirror (4) and a tilt mechanism (10) connected thereto, and provision is made of a substrate (11) on which the tilt mechanism (10) is formed.

11. Laser scanning microscope according to Claim 10, wherein the substrate (11) has a passage opening (12), through which the rear side of the scanning mirror (2) is able to be impinged by the light beam (13) of the light source (14).

12. Laser scanning microscope according to Claim 10 or 11, wherein the scanning mirror (2) is embodied in monolithic form with the substrate (11).

13. Laser scanning microscope according to any one of the preceding claims, wherein the scanning mirror (2) is embodied as a MEMS scanning mirror.

## Revendications

1. Microscope à balayage laser, comprenant un dispositif de miroir de balayage doté d'un miroir de balayage de microsystème (2) qui est monté pivotant autour d'au moins un axe, et d'un module de détection (3) qui présente une source de lumière (14) qui émet un faisceau lumineux (13) et un détecteur de position (19, 25, 26),
**caractérisé en ce que** le miroir de balayage est réalisé sous la forme d'un miroir de balayage de microsystème réalisé de manière monolithique, et le module de détection (3) applique le faisceau lumineux (13) au miroir de balayage (7) par derrière de sorte que le faisceau lumineux (13) est réfléchi sur la face arrière du miroir de balayage (2) vers le détecteur de position (19, 25, 26) qui mesure la position du faisceau lumineux réfléchi (20) à partir de laquelle l'angle de rotation du miroir de balayage (7) autour dudit au moins un axe peut être déduit, le module de détection (3) présentant une optique d'imagerie (15), qui focalise le faisceau lumineux (13) sur la face arrière du miroir de balayage (2), et une optique de projection (17) qui reproduit le faisceau lumineux (20) réfléchi par la face arrière du miroir de balayage (2) sous la forme d'un faisceau lumineux (20) collimaté sur le détecteur de position (19).

2. Microscope à balayage laser selon la revendication 1, dans lequel l'optique d'imagerie (15) est réalisée sous la forme d'une optique d'imagerie 1:1.

3. Microscope à balayage laser selon la revendication 1 ou 2, dans lequel l'optique d'imagerie (15) comporte un séparateur de faisceaux (18) qui sert à séparer le faisceau lumineux (13) de la source de lumière (14) et le faisceau lumineux (20) réfléchi par la face arrière du miroir de balayage (2).

4. Microscope à balayage laser selon l'une quelconque des revendications 1 à 3, dans lequel l'optique d'imagerie (15) présente au moins deux optiques partielles (16, 17), et le séparateur de faisceaux (18) est disposé entre les deux optiques partielles (16, 17) .

5. Microscope à balayage laser, dans lequel la source de lumière (14) est réalisée sous forme de DEL, et la trajectoire du faisceau entre les deux optiques partielles (16, 17) est une trajectoire du faisceau collimatée pour le faisceau lumineux de la source de lumière (14).

6. Microscope à balayage laser selon l'une quelconque des revendications précédentes, dans lequel le détecteur de position (19, 25) est réalisé sous forme de détecteur à quadrants.

7. Microscope à balayage laser selon l'une quelconque des revendications précédentes, dans lequel le faisceau lumineux (13) de la source de lumière (14) passe par le détecteur de position et est incident sur la face arrière du miroir de balayage (2).

8. Microscope à balayage laser selon l'une quelconque des revendications précédentes, dans lequel le miroir de balayage de microsystème (2) est installé dans un boîtier, la face inférieure de boîtier présentant une ouverture de passage à travers laquelle le faisceau lumineux (13) de la source de lumière (14) peut être appliqué à la face arrière du miroir de balayage (2).

9. Microscope à balayage laser selon l'une quelconque des revendications précédentes, dans lequel le module de détection (3) délivre à l'aide de la position mesurée du faisceau lumineux réfléchi (13) un signal d'angle qui représente l'angle de rotation du miroir de balayage (7) autour dudit au moins un axe.

10. Microscope à balayage laser selon l'une quelconque des revendications précédentes, dans lequel le miroir de balayage (2) présente un miroir de déviation (4) et un mécanisme de basculement (10) relié à celui-ci, et un substrat (11) est prévu sur lequel est réalisé le mécanisme de basculement (10).

11. Microscope à balayage laser selon la revendication 10, dans lequel le substrat (11) présente une ouverture de passage (12) à travers laquelle le faisceau lumineux (13) de la source de lumière (14) peut être appliqué à la face arrière du miroir de balayage (2).

12. Microscope à balayage laser selon la revendication 10 ou 11, dans lequel le miroir de balayage (2) est réalisé de manière monolithique avec le substrat (11).

13. Microscope à balayage laser selon l'une quelconque des revendications précédentes, dans lequel le miroir de balayage (2) est réalisé sous la forme d'un miroir de balayage MEMS.
